# FASCICULE DE BREVET EUROPEEN

(11) **EP 0 440 523 B1**
(45) Date de publication et mention de la délivrance du brevet: **18.01.1995**
(21) Numéro de dépôt: 91400148.2
(22) Date de dépôt: 23.01.1991
(51) Int. Cl.: C04B 28/04, C04B 14/38

(54) **Mortier pour la fabrication de tuyaux résistant à la pression, tuyau réalisé à partir de ce mortier, et son procédé de fabrication**
Mörtel zur Herstellung druckresistenter Röhren, aus diesem Mörtel hergestelltes Rohr und Verfahren zu seiner Herstellung
Mortar for the fabrication of pressure resistant pipes, pipe made from this mortar and process for its fabrication

(30) Priorité: 30.01.1990 FR 9001084
(43) Date de publication de la demande: 07.08.1991
(73) Titulaire: SOBETUBE, F-54000 Nancy (FR)
(72) Inventeur: Soukatchoff, Pascal, F-54690 Lay Saint Christophe (FR)
(74) Mandataire: Jacobson, Claude

(56) Documents cités:
- EP-A- 0 150 002
- WO-A-87/07597
- US-A- 4 076 884
- CHEMICAL ABSTRACTS, vol. 105, no. 10, 8 septembre 1986, page 344, résumé no.84230x, Columbus, Ohio, US; & JP-A-61 21 951 (DENKI KAGAKU KOGYO K.K. et al.) 30-01-1986
- CHEMICAL ABSTRACTS, vol. 107, no. 16, 19 octobre 1987, page 357, résumé no.139873h, Columbus, Ohio, US; &SE-A-449 745 (ROCKWOOL AB) 18-05-1987
- CHEMICAL ABSTRACTS, vol. 97, no. 4, 26 juillet 1982, page 257, résumé no.27772t, Columbus, Ohio, US; &JP-A-82 34 067 (KAJIMA CORP.) 24-02-1982
- CHEMICAL ABSTRACTS, vol. 84, no. 8, 23 février 1976, page 358, résumé no.49258p, Columbus, Ohio, US; Z. ZHANGABYLOV et al.: "Technological properties of gypsum cement plugging mortars", & TR. INST. KHIM. NEFTI PRIR.SOLEI, AKAD.NAUK KAZ. SSR 1974, 7, 12-16

## Description

La présente invention est relative à un mortier destiné à la fabrication de tuyaux résistant à la pression.

La fabrication de tuyaux résistant à la pression en béton nécessite le recours à des armatures en acier longitudinales et circonférentielles, avec souvent utilisation de la technique de la précontrainte sur les armatures longitudinales.

Les mortiers de ciment Portland renforcés par des fibres et autoclavés permettent de réduire les armatures nécessaires. Cependant, avec les mortiers connus, la pression maximale admissible sans armature circonférentielle reste très limitée.

L'invention a pour but de fournir un mortier permettant de réaliser des tuyaux qui possèdent une résistance à la pression améliorée.

A cet effet, l'invention a pour objet un mortier comprenant :
- du ciment Portland artificiel ;
- du quartz broyé ;
- du plâtre ;
- de l'eau ; et
- au moins deux catégories de fibres de renforcement, dont une première catégorie de granulométrie inférieure à 0,5 mm environ et une seconde catégorie de granulométrie allant jusqu'à 1,5 à 2 mm environ.
Suivant d'autres caractéristiques :
- la première catégorie de fibres comprend deux types de fibres, à savoir un premier type de granulométrie 0 à 100 »m ou 0 à 75 »m environ, et un second type de fibres de granulométrie 20 à 500 »m environ;
- la proportion en volume, par rapport à l'ensemble des matières sèches, de la première catégorie de fibres est comprise entre 2 et 16 %, et est de préférence voisine de 9 %;
- la proportion en volume, par rapport à l'ensemble des matières sèches, de la seconde catégorie de fibres, est comprise entre 1 et 5 %, et est de préférence voisine de 3,5 %;
- les fibres de la première catégorie sont des fibres minérales et celles de la deuxième catégorie sont des fibres métalliques;
- la granulométrie du quartz est comprise entre 5 et 20 »m environ, la quantité de quartz étant telle que le rapport molaire CaO/SiO₂ du mortier est comprise entre 0,8 et 1,3 et est de préférence voisin de 1 ;
- le plâtre est présent dans une proportion en poids de 0,1 à 0,5 %, de préférence 0,35 %, par rapport au ciment ; et
- l'eau est présente dans une proportion en poids de 35 à 40 % par rapport à l'ensemble du ciment et du quartz.

L'invention a également pour objets :
- un tuyau résistant à la pression réalisé à partir d'un tel mortier, ce tuyau ayant notamment une épaisseur de paroi d'environ 18 à 20 mm et, dans un mode de réalisation, comportant des armatures uniquement longitudinales; et
- un procédé de fabrication d'un tuyau résistant à la pression, caractérisé en ce qu'on malaxe un mortier tel que défini ci-dessus, on le centrifuge dans un moule, de préférence entre 100 et 150 g, notamment à environ 130 g, et on le soumet à un autoclavage, de préférence sous 6,5 bars et à 160°C.

Un exemple de mise en oeuvre de l'invention va maintenant être décrit.

Pour réaliser un tuyau de diamètre nominal 300 mm, on constitue un mortier à partir des matériaux suivants :
- du ciment Portland artificiel, de préférence de Classe 55 ou Haute Performance ;
- du quartz broyé de granulométrie comprise entre 5 et 20 »m, de préférence avec une dimension moyenne de l'ordre de 10 »m, dans une quantité telle que le rapport molaire CaO/SiO₂ du mortier soit compris entre 0,8 et 1,3, de préférence voisin de 1 ;
- du plâtre, dans une proportion en poids de 0,1 à 0,5 %, de préférence d'environ 0,35 %, par rapport au ciment ;
- de l'eau dans une proportion en poids de 35 à 40 %, de préférence d'environ 40 %, par rapport à l'ensemble du ciment et du quartz ;
- trois types différents de fibres de renforcement, choisies de façon à recouvrir les gammes de dimensions approximatives 0 à 75 »m, 0,02 à 0,5mm et 1 à 1,5 ou 2 mm respectivement. On choisit par exemple:

. Des fibres minérales courtes, notamment de wollastonite, de granulométrie 0 à 100 »m, ou 0 à 75 »m, dans une proportion de 1 à 8 %, de préférence d'environ 4,5 %, par rapport au volume total des matières sèches ;
. Des fibres minérales moyennes, notamment de muscovite, de laine de verre ou de laine de roche, de granulométrie 20 à 500 »m, dans une proportion de 1 à 8 %, de préférence d'environ 4,5 %, par rapport au volume total des matières sèches du mortier ; et
. Des fibres métalliques longues, notamment des fibrilles d'acier de granulométrie 0 à 1,5 mm, avec 40 % de fibres de longueur inférieure à 0,1 mm, dans une proportion de 1 à 5 %, de préférence d'environ 3,5 %, par rapport au volume total des matières sèches du mortier.

Pour fabriquer un tuyau résistant à la pression à partir de ce mortier, on effectue les opérations suivantes :
- pesage des matières sèches, sans les fibres ;
- pesage de l'eau ;
- malaxage de ces matériaux ;
- pesage des fibres ;
- mélangeage des fibres avec les matières malaxées, et malaxage jusqu'à obtention d'une pâte homogène dans laquelle les fibres sont bien enrobées ;
- centrifugation dans une coquille d'acier à une vitesse correspondant à une accélération de 100 à 150 g, de préférence de 130 g environ ;
- autoclavage du tuyau obtenu, suivant le procédé connu sous la dénomination commerciale "Thermosoc", sous une pression de 6,5 bars, avec une montée en température jusqu'à 160°C pendant 1 heure 15 minutes, maintien à 160°C pendant 4 heures et refroidissement rapide.

On a obtenu ainsi un tuyau qui, avec une épaisseur de paroi de 18 à 20 mm et sans armature circonférentielle, possède une pression d'éclatement de l'ordre de 15 bars, sans qu'apparaisse aucun perlage de liquide avant l'éclatement, tandis que l'essai d'écrasement d'un anneau de ce tuyau a montré une contrainte d'écrasement de l'ordre de 20 MPa.

On pense que ces performances sont dues à la présence de plusieurs catégories de fibres qui empêchent la formation de plusieurs types de fissures compte tenu des dimensions des grains des matériaux constituant le mortier.

## Revendications

1. Mortier pour la fabrication de tuyaux résistant à la pression, caractérisé en ce qu'il comprend :
- du ciment Portland artificiel ;
- du quartz broyé ;
- du plâtre ;
- de l'eau ; et
- au moins deux catégories de fibres de renforcement, dont une première catégorie de granulométrie (longueur) inférieure à 0,5 mm et une seconde catégorie de granulométrie allant jusqu'à 1, 5 à 2 mm

2. Mortier suivant la revendication 1, caractérisé en ce que la première catégorie de fibres comprend deux types de fibres, à savoir un premier type de granulométrie 0 à 100 »m ou 0 à 75 »m, et un second type de fibres de granulométrie 20 à 500 »m.

3. Mortier suivant l'une des revendications 1 ou 2, caractérisé en ce que la proportion en volume, par rapport à l'ensemble des matières sèches, de la première catégorie de fibres est comprise entre 2 et 16 %, et est de préférence voisine de 9 %.

4. Mortier suivant l'une quelconque des revendications 1 à 3, caractérisé en ce que la proportion en volume, par rapport à l'ensemble des matières sèches, de la seconde catégorie de fibres, est comprise entre 1 et 5 %, et est de préférence voisine de 3,5 %.

5. Mortier suivant l'une quelconque des revendications 1 à 4, caractérisé en ce que les fibres de la première catégorie sont des fibres minérales et celles de la deuxième catégorie sont des fibres métalliques.

6. Mortier suivant l'une quelconque des revendications 1 à 5, caractérisé en ce que :
- la granulométrie du quartz est comprise entre 5 et 20 »m environ, la quantité de quartz étant telle que le rapport molaire CaO/SiO₂ du mortier est comprise entre 0,8 et 1,3 et est de préférence voisin de 1 ;
- le plâtre est présent dans une proportion en poids de 0,1 a 0,5 %, de préférence 0, 35 %, par rapport au ciment ;
- l'eau est présente dans une proportion en poids de 35 à 40 % par rapport à l'ensemble du ciment et du quartz.

7. Tuyau résistant à la pression réalisé à partir d'un mortier conforme à l'une quelconque des revendications 1 à 6.

8. Tuyau suivant la revendication 7, caractérisé en ce que l'épaisseur de paroi est d'environ 18 à 20 mm.

9. Tuyau suivant l'une des revendications 7 ou 8, caractérisé en ce qu'il comporte des armatures uniquement longitudinales.

10. Procédé de fabrication d'un tuyau résistant à la pression, caractérisé en ce qu'on malaxe un mortier conforme à l'une quelconque des revendications 1 à 6, on le centrifuge dans un moule, de préférence entre 100 et 150 g, notamment à environ 130 g, et on le soumet à un autoclavage, de préférence sous 6,5 bars et à 160°C.

## Claims

1. Mortar for the fabrication of pressure-resistant pipes, characterised in that it comprises:
- artificial Portland cement;
- ground quartz;
- gypsum plaster;
- water; and
- at least two categories of reinforcing fibre, a first category having a size (length) of less than 0.5 mm and a second category having a size of up to 1.5 to 2 mm.

2. Mortar according to Claim 1, characterised in that the first category of fibre comprises two types of fibre, namely a first type with a size of 0 to 100 »m or 0 to 75 »m, and a second type of fibre with a size of 20 to 500 »m.

3. Mortar according to one of Claims 1 or 2, characterised in that the proportion by volume, with respect to all the dry materials, of the first category of fibre is between 2 and 16% and preferably around 9%.

4. Mortar according to any one of Claims 1 to 3, characterised in that the proportion by volume, with respect to all the dry materials, of the second category of fibre is between 1 and 5% and preferably around 3.5%.

5. Mortar according to any one of Claims 1 to 4, characterised in that the fibres in the first category are mineral fibres and those in the second category are metallic fibres.

6. Mortar according to any one of Claims 1 to 5, characterised in that:
- the particle size of the quartz is between approximately 5 and 20 »m, the quantity of quartz being such that the CaO/SiO₂ molar ratio of the mortar is between 0.8 and 1.3 and preferably around 1;
- the gypsum plaster is present in a proportion by weight of 0.1 to 0.5%, and preferably 0.35%, with respect to the cement;
- the water is present in a proportion by weight of 35 to 40% with respect to all the cement and quartz.

7. Pressure-resistant pipe produced from a mortar according to any one of Claims 1 to 6.

8. Pipe according to Claim 7, characterised in that the wall thickness is approximately 18 to 20 mm.

9. Pipe according to one of Claims 7 or 8, characterised in that it includes solely longitudinal reinforcements.

10. Process for fabricating a pressure-resistant pipe, characterised in that a mortar according to any one of Claims 1 to 6 is mixed, is centrifuged in a mould, preferably between 100 and 150 g and notably around 130 g, and is subjected to autoclaving, preferably at 6.5 bars and 160°C.

## Patentansprüche

1. Mörtel (Speis) für die Herstellung von druckbeständigen Rohren, dadurch gekennzeichnet, daß er enthält:
- künstlichen Portland-Zement;
- gemahlenen Quarz;
- Gips;
- Wasser; und
- mindestens zwei Arten von Verstärkungsfasern, von denen eine erste Art eine Granulometrie (Teilchengröße) (Länge) von weniger als 0,5 mm hat, und eine zweite Art eine Granulometrie (Teilchengröße) hat, die bis zu 1,5 bis 2 mm betragen kann.

2. Mörtel nach Anspruch 1, dadurch gekennzeichnet, daß die erste Art von Fasern zwei Fasertypen umfaßt, d.h. einen ersten Typ mit einer Granulometrie (Teilchengröße) von 0 bis 100 »m oder 0 bis 75 »m, und einen zweiten Fasertyp mit einer Granulometrie (Teilchengröße) von 20 bis 500 »m.

3. Mörtel nach einem der Ansprüche 1 oder 2, dadurch gekennzeichnet, daß der Volumenmengenanteil, bezogen auf die Gesamtmenge der Trockensubstanzen, der ersten Art von Fasern zwischen 2 und 16 %, vorzugsweise in der Nähe von 9 %, liegt.

4. Mörtel nach einem der Ansprüche 1 bis 3, dadurch gekennzeichnet, daß der Volumenmengenanteil, bezogen auf die Gesamtmenge der Trockensubstanzen, der zweiten Art von Fasern zwischen 1 und 5 %, vorzugsweise in der Nähe von 3,5 %, liegt.

5. Mörtel nach einem der Ansprüche 1 bis 4, dadurch gekennzeichnet, daß die Fasern der ersten Art Mineralfasern sind und daß diejenigen der zweiten Art Metallfasern sind.

6. Mörtel nach einem der Ansprüche 1 bis 5, dadurch gekennzeichnet, daß die Granulometrie (Teilchengröße) des Quarzes etwa zwischen 5 und 20 »m liegt, wobei die Quarzmenge derart ist, daß das Molverhältnis CaO/SiO₂ des Mörtels zwischen 0,8 und 1,3, vorzugsweise in der Nähe von 1, liegt;
- der Gips in einem Gewichtsmengenanteil von 0,1 bis 0,5 %, vorzugsweise von 0,35 %, bezogen auf den Zement, vorliegt;
- das Wasser in einem Gewichtsmengenanteil von 35 bis 40 %, bezogen auf die Gesamtmenge von Zement und Quarz, vorliegt.

7. Druckbeständiges Rohr, hergestellt aus einem Mörtel nach einem der Ansprüche 1 bis 6.

8. Rohr nach Anspruch 7, dadurch gekennzeichnet, daß die Dicke der Wand etwa 18 bis 20 mm beträgt.

9. Rohr nach einem der Ansprüche 7 oder 8, dadurch gekennzeichnet, daß es Armierungen nur in der Längsrichtung aufweist.

10. Verfahren zur Herstellung eines druckbeständigen Rohres, dadurch gekennzeichnet, daß man einen Mörtel nach einem der Ansprüche 1 bis 6 durchmischt, ihn in einer Form zentrifugiert, vorzugsweise zwischen 100 und 150 g, insbesondere bei etwa 130 g, und ihn in einem Autoklaven behandelt, vorzugsweise unter 6,5 bar und bei 160°C.
